Europäisches Patentamt

European Patent Office

Office européen des brevets

(11) Publication number: **0 430 711 A2**

## EUROPEAN PATENT APPLICATION

(21) Application number: 90313064.9

(22) Date of filing: 30.11.90

(51) Int. Cl.⁵: **H04N 7/173**

(30) Priority: 30.11.89 GB 8927063

(43) Date of publication of application:
05.06.91 Bulletin 91/23

(84) Designated Contracting States:
**AT BE CH DE DK ES FR GB GR IT LI LU NL SE**
**Bulletin 2**

(71) Applicant: THORN EMI BUSINESS
COMMUNICATIONS LTD
8 Roxborough Way
Maidenhead, Berkshire SL6 3TZ(GB)

(72) Inventor: **Gower, John**
**11 Jasmin Road**
**West Ewell, Surrey KT19 9EA(GB)**
Inventor: **Sinclair, Bill**
**1 Wildes Cottages, Ewell Road**
**Cheam Sutton, Surrey SM3 8AS(GB)**
Inventor: **Haigh, Robert**
**10 Boxhill Way, Strood Green**
**Betchworth, Surrey RH3 7HY(GB)**
Inventor: **Shirvani, Frank**
**16 Regency Close, Llantwit Major**
**South Glamorgan, CF6 9XW(GB)**

(74) Representative: **Sorenti, Gino et al**
**THORN EMI Patents Limited, Central**
**Research Laboratories, Dawley Road**
**Hayes, Middlesex UB3 1HH(GB)**

(54) **Video network.**

㊼ A video network includes a head end terminal 1 for providing video signals from a number of video players 7 in addition to off-air broadcast signals 9. The video signals are distributed via a distribution system to a number of television receivers, each having a respective terminal for detecting the channel to which the television is tuned. A control unit 8 compares the phase of the signals detected by a terminal with the phase of each of the video signals distributed via the distribution network to determine whether the television is tuned to a channel from one of the video players 7 or a channel from an off air broadcast.

The network can also inhibit the operation of any television receiver detected as being tuned to any one or more of the video player channels.

COMBINERS
(11)

VHF

DISTRIBUTION
SYSTEM (4)

LAUNCH
AMPLIFIER

FILTER

UHF SIGNALS FROM AERIAL

*FIG.2*

MONITOR 5

COMPUTER 6

MODEM 21

TX/RX 14

CONTROL UNIT 8

VIDEO PLAYER 7

MODULATOR 10

## VIDEO NETWORK

The present invention relates to video networks which enable the remote detection of a video channel to which a television receiver is tuned and, in particular, this invention relates to a video network as employed in an hotel or similar accommodation type environment.

Many hotel and similar accommodation type complexes are provided with video distribution systems. Frequently, such systems include video signal sources which are derived from off air type broadcasts and a number of locally generated movie channels, such as can be generated from video tape players. The off air type broadcasts are usually provided free to a viewer whilst the tape source movie channels are only watchable upon payment of a fee. Therefore, it is necessary in such systems to be able to determine remotely whether a viewer has a television receiver tuned to a free or a fee paying channel.

Various systems have previously been proposed to determine remotely the channel to which a television receiver has been tuned. Many of these known arrangements, such as that described in US Patent 3973206, require an internal connection to the television receiver, making them unsuitable for many applications of video signal distribution systems. Another arrangement, such as that described in US Patent 4764808, includes a sensor located in the proximity of the monitored television receiver, the sensor being arranged to detect a horizontal sweep signal of the television receiver. A frequency value of the detected signal is determined and compared with a number of stored values of characteristic frequencies, thereby to identify the broadcast signal source to which the television receiver is tuned. However, such a system is reliant upon the stored values of characteristic frequencies being updated as the frequencies of available channels are changed. If air broadcast signals only are available on a system, the channel frequencies available do not change regularly. However, many video signal distribution systems incorporate channels for conventional broadcast cable or satellite television signals and channels for locally generated signals from tape sources such as conventional recorded tape programmes played on video playback machines. In modern systems there is frequently a need to provide a relatively large number of video tape channels as it enables the hotelier to provide a variety of channels showing programmes particular to the hotel. Such video channels are usually changed on a regular basis and this may require the channels to be broadcast on different frequencies. With systems as described in US Patent 4764808, there would be, therefore, a need for the stored values of characteristic frequencies to be updated whenever the broadcast frequency of a tape source channel is changed. There is a possibility that updating of the stored values can be overlooked, enabling viewers to watch a tape source channel free of charge when, in fact, a viewing charge should be levied. There is a distinct need, therefore, for a video signal distribution system which can distinguish between air broadcast and tape source video signal sources so as to enable the system to automatically recognise when a tape source channel is being viewed irrespective of the broadcast frequency of the channel. In this manner the system is able to distinguish between free and fee levy channels without recourse to stored values, obviating the possibility that the stored values may not be updated as channel broadcast frequencies are changed.

The present invention seeks to provide a video network system which can detect remotely if a television receiver in a hotel room, for example, is tuned to one of a group of pay channels. If this remote television receiver is detected as being tuned to such a pay channel, the system will provide a warning, such as an audible and/or visible warning, in the room that if viewing of the selected channel continues the room guest will be billed accordingly.

Accordingly, there is provided a video network comprising a head end equipment at a first location for providing video signals on a plurality of channels; one or more terminals for location remote from the head end equipment, the or each terminal associated with a respective television receiver; control means associated with the head end equipment for providing control signals for controlling at least one terminal; respective further control means associated with the or each terminal for causing operation of the terminal and or the television receiver associated therewith in response to control signals received thereby, and respective detection means associated with the or each terminal for detecting whether the television receiver associated therewith is tuned to one of a specific selection of channels of the plurality of channels and for providing an indication to the head end equipment that the television receiver is tuned to one of the specific selection of channels.

Preferably, the head end equipment includes means to provide video player source video signals and video signals from off air broadcasts.

The detection means is, advantageously, arranged to detect the instantaneous phase of the video signal to which the television receiver associated therewith is tuned and to compare the detected instantaneous phase with the instantaneous phase of each of the video signals provided by the head end equipment, thereby to determine whether the television receiver is tuned to one of the specific selection of channels.

The detection means may comprise a counter circuit arranged to receive from a terminal a first signal dependent upon the video signal to which the television receiver associated with the said terminal is tuned and, in sequence, a plurality of further signals, each dependent upon a respective one of the video signals provided by the head end equipment on the plurality of channels, the counter circuit being arranged to commence counting on receipt of a leading edge of a first signal and to terminate counting on receipt of a leading edge of a further signal, thereby to provide a count value indicative of the relative phase between the first and further signals.

The network may also include a printer for providing recorded details of any television receiver detected as being tuned to one of the specific selection of channels.

In a preferred embodiment the control means is arranged, on detection of a television receiver tuned to one of the specific selection of channels, to provide control signals to the television receiver associated with the terminal for inhibiting the operation of the television receiver.

The control means may also be arranged to provide warning signals for providing an indication to a viewer of a television receiver detected as tuned to one of the specific channels that the television receiver is tuned to one of the specific channels.

Any terminal may further comprise a current sensor for sensing operation of a television receiver associated with the terminal, the terminal being arranged to activate a tamper alarm if a characteristic of the output signal from the detection means monitored by the further control means is detected as exceeding predetermined limits and the television receiver has been sensed as being in operation.

In order that the invention may more readily be understood, a description is now given, by way of example only, reference being made to the accompanying drawings, in which:

Figure 1 is a schematic representation of a network in accordance with the invention.

Figure 2 shows a schematic block diagram of head end equipment for the system illustrated in Figure 1.

Figure 3 shows a schematic block diagram of a control unit for the head end equipment for the system illustrated in Figure 1.

Figure 4 shows a schematic block diagram of a room terminal for the system illustrated in Figure 1.

In the present invention, the method of establishing whether a television receiver is tuned into a video pay channel is based upon comparing a characteristic of the line synchronisation pulses at a remote location with those generated by the pay channel source. If they match over a period of time then the remotely located television receiver is acknowledged as being currently tuned to that particular source of video signals.

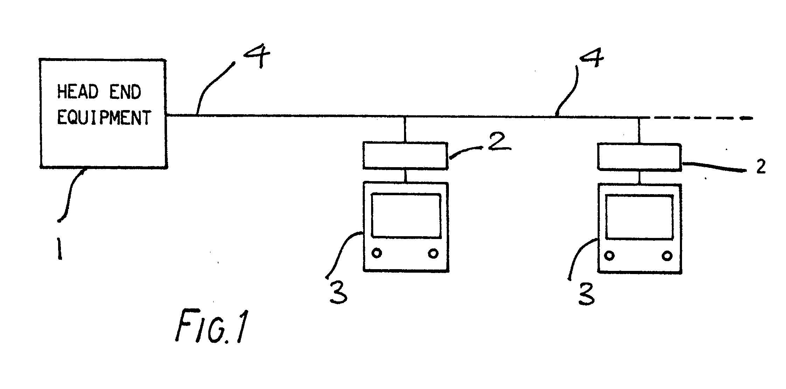

As can be seen from Figure 1 a network according to the present invention comprises of a head end equipment 1, situated, for example, in an hotel reception area, and a plurality of room terminals 2, which are each associated with individual television receivers 3 located, for example, in the bedrooms of the hotel. Communications between the head end equipment 1 and the room terminals 2 are established via a distribution system 4 which may be a standard co-axial type distribution system.

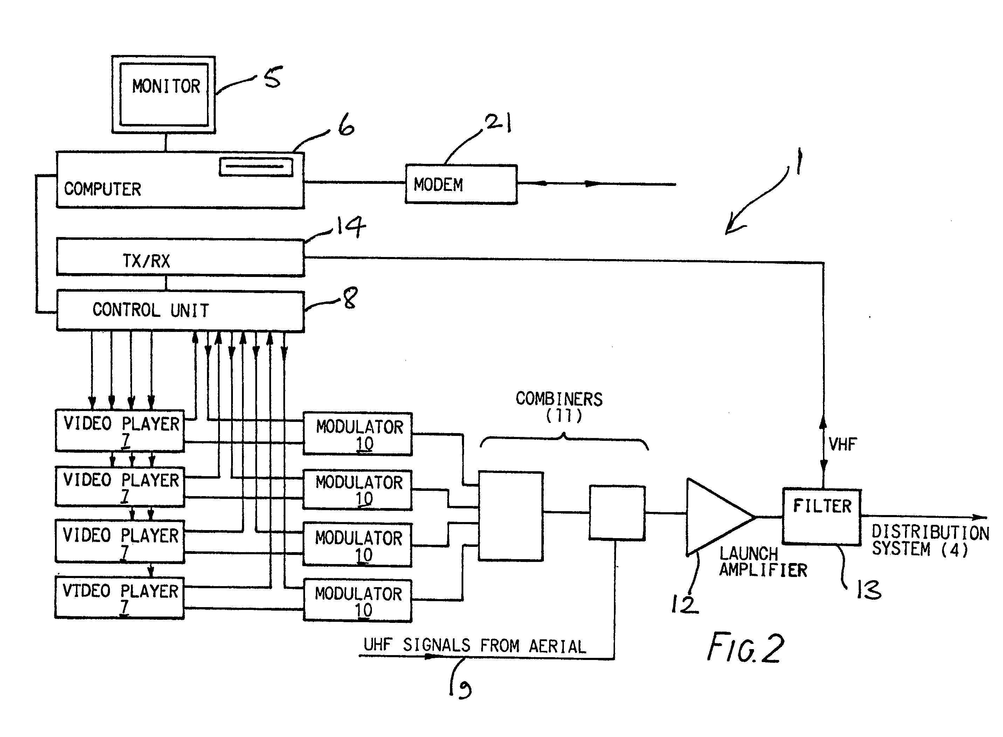

Figure 2 shows the head end equipment 2 in greater detail. The head end equipment comprises a monitor 5, a computer 6, which is the initiator of all the actions or commands of the system, a number of video tape players 7 which provide a selection of video signal sources for subsequent transmission, a control unit 8, and a receiver means for providing to the system conventional broadcast, cable or satellite television signals 9.

The computer 6 communicates with each room terminal 2 via the distribution system 4. Each room terminal is originally programmed with a unique address, such as its serial number, so that the computer 6 is able to identify uniquely each room terminal 2. The computer also controls a ticket printer (not shown) and modem 2l. The ticket printer is used to provide a printed record showing when a guest has exceeded the free viewing period permitted on a fee payable channel and consequently should be charged for the particular programme viewed. The modem 2l is used to provide a remote access link to the computer for maintenance/service purposes.

In operation, the computer 6, via the control unit 8, initiates the video tape players 7 to function as required. The output signals of each of the video players 7 are modulated via modulators 10 up to UHF and fed into a combiner 11 which combines these UHF modulated signals with the UHF signals 9 from standard off air broadcasts and other external sources of television picture signals. All these signals are then amplified by a launch amplifier 12 to a level sufficient to drive the network.

Before these combined signals are finally launched onto the distribution system 4, a VHF filter 13 is employed to insert forward path control data and extract return path control data, the function of which will be explained in the following description. The control data provides a control link between the head end equipment 1 and each room terminal 2.

The video sources 7 are controlled by the computer 6 via the control unit 8, and an interface between the distribution system 4 and the control unit 8 is provided by a separate electronics unit in the form of a transceiver 14.

The transceiver 14 demodulates down stream data control signals and modulates upstream data control signals.

The control unit 8 is arranged as a hands off communication processor which is capable of taking commands from the computer 6 and distributing them to the network of room terminals 2 via the distribution system 4. In addition to this function, the control unit 8 also makes phase measurements of waveforms returned from the room terminals 2 in order that a comparison can be made with any of the output signals from the video player sources 7 under the control of the computer 6.

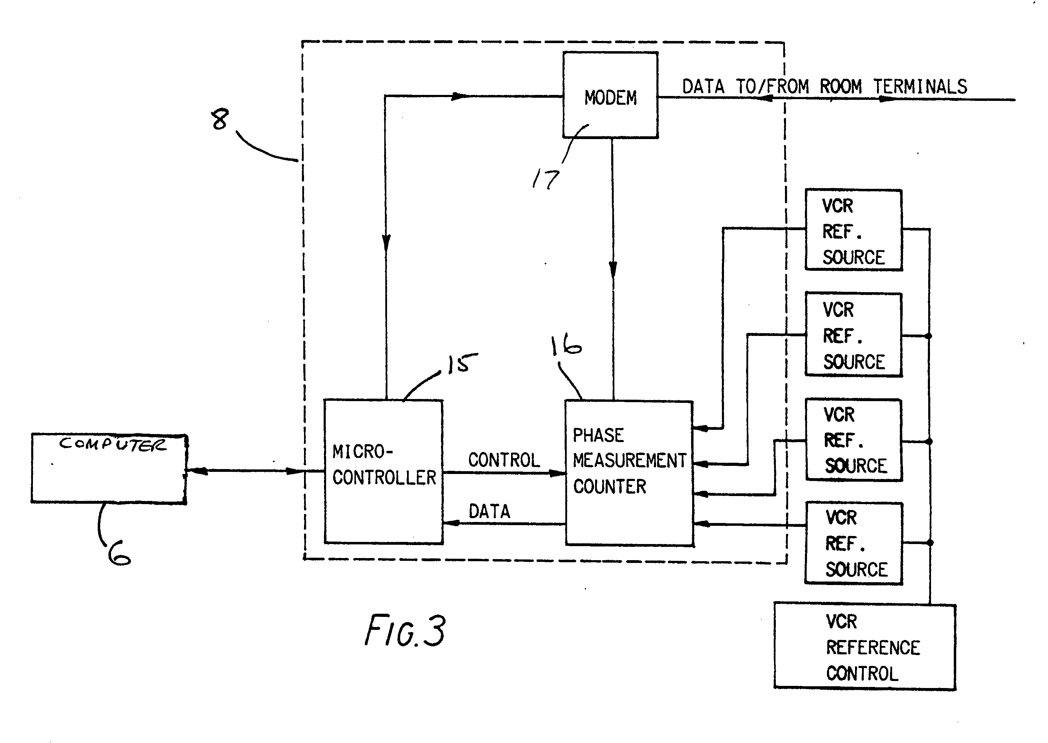

The control unit 8 is shown in greater detail in Figure 3, and includes a microcontroller 15 coupled to a phase measurement counter 16. In its idle or standby mode the microcontroller waits for an input or command signal from the computer 6. The commands received can result in two actions.

If a command can be satisfied locally, the action is executed and a reply sent back to the computer. If however, the command requires that data be transmitted to a remote room terminal 2, more process operations are involved.

The computer 6 is arranged to generate two of this latter type of commands which require communication with the remote room terminals; namely, status polls and room terminal commands. Room terminal commands cause the room terminal 2 to execute some form of action. The terminal may be used to display various messages such as flashing a light which indicates to a viewer that there is a message waiting in the hotel reception or that they are being charged for watching a particular pay movie channel, for example. It can also be used to pulse or de-energise a television relay, thereby to switch off the television receiver reset the terminal via a watchdog or set an internal parameter stored in RAM. These features will be explained in more detail later.

Initially, status poll and room terminal commands are treated in the same manner by the microcontroller 15. A transmit packet of data is compiled consisting of a number of bytes; this data is transmitted serially via the distribution system 4 to the room terminals 2, and a single byte reply is received from the room terminal. In the case of a room terminal command, the microcontroller 15 then passes this reply to the computer 6 and returns to the standby mode.

A room terminal status poll, however, is more complex. Directly after the reply byte is returned a sample of the line time base signal detected from the television receiver by the associated room terminal 2 is supplied to the control unit 8 via a data modem 17. This received signal is then compared to the output signal of the many video players 7, such as conventional video cassette recorders (VCR's), each producing a similar line time base reference. A relative phase measurement is made between the received and output signals.

The phase difference between the many individual video source outputs may not be a designed feature but is inherent in the natural operation of a video player, in which the operation induces phase jitter into the output signal. It is the signature relating to this jitter to which the remote television signal is compared. If the signature of the jitter of one of the video player output signals has a negligible change in phase difference when compared to the television signal then the television is deemed to be tuned to receive the video channel on which the video player in question is operating.

Television systems in the United Kingdom operate with a time base of 64$\mu$s duration. As 64 $\mu$s time base is too fast for phase measurement to be achieved directly, a phase measurement counter circuit 16 is provided in the control unit 8 where many locally generated references can be compared with a pulse stream from each of the room terminals. A multiplexer (not shown) allows the microcontroller 15 to select one of the video signal waveforms from the tape players 7 for comparison in the phase measurement counter circuit 16. A rising edge of the video signal from the tape player will cause the counter circuit to start counting and a rising edge of the signal from the room terminal will cause the counter to stop. The count value attained by the counter circuit 16 will then relate to the relative phase between the reference signal and the room terminal signal.

The object of this measurement procedure is to determine which of the many reference signals matches the waveform from the remote terminal. To this end, the microcontroller 15 needs to examine the phase of each of the many tape player signal sources in turn to obtain one set of results. These results are averaged for each of the many channels over the measurement period.

Once the phase measurement process has been completed, the control unit 8 can formulate a suitable status reply, including the averaged phase values, and provide this information to the computer 6.

The multiplexer is arranged so that during a period of inactivity of any of the VCR or tape player sources, the measurement process need not be carried out for that source.

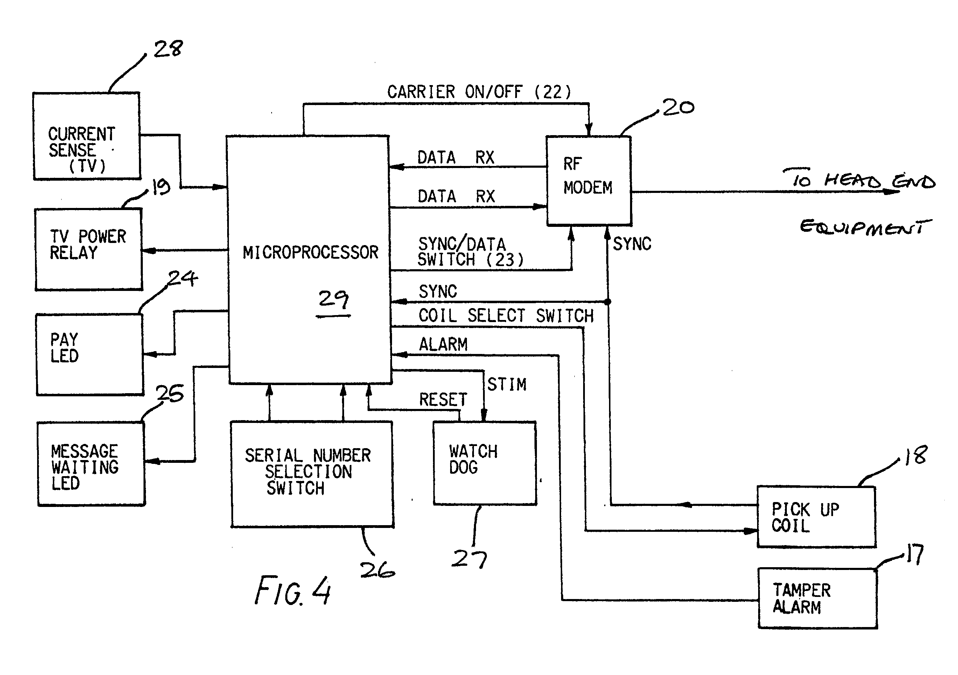

There are two principal tasks which the room terminal 2, shown in block form in Figure 4, must perform in response to control signals provided to the terminal from the computer 6 via the distribution network:

(i) All the interfaces with the television receiver and any other device associated therewith, must be scanned and the status of the devices stored, such as in a suitable random access memory (RAM).

(ii) When a command is issued from the head end computer it should be decoded and, if necessary, executed and a reply returned to the computer reflecting the stored status.

The room terminal, as shown in Figure 4, communicates with the head end computer via an RF modem 20. Incoming data is demodulated by the modem and the resulting serial waveform supplied to an interrupt input of a microprocessor 29, which acts as a controller within the room terminal.

Before any transmission commences, the modem 20 must be turned on by selecting a data carrier switch 22 and allowing a suitable settling time before transmission of data commences. If required, once the data has been transmitted, a sample of the synchronisation pulse train associated with the television receiver can be transmitted back to the computer 6 by selecting a Data/Sync switch 23. Once the transmission is complete the data carrier switch 22 is deselected.

A tamper alarm 17 is also provided so that the computer 6 can be alerted of any movement of a pickup coil 18 associated with a television receiver. Also, a television current sense circuit 28 indicates the operation state of the television set; ie, on or off. Two LED drivers allow pay status 24 and message waiting 25 warnings to be displayed to a viewer. A serial number selection switch 26, used for computer address purposes, is read via a parallel port of the microprocessor 29.

To improve reliability, a watchdog timer 27 is provided. The output of the watchdog timer may be pulsed at a specified frequency of, for example, 1Hz, in order to provide a system stimulus. If a fault in the system stops this stimulus the system is automatically reset.

In order for a room terminal 2 to detect the line synchronisation pulses from its associated television receiver pickup coils 18 are employed which can derive the horizontal synchronisation pulses from the line time base of the television receiver. The pickup coils 18 do not require any internal connection to be made to a televison and may be provided in two forms, depending upon the environmental conditions.

The first form caters for situations in which the emanating signals from the television receiver are strong enough to be detected within the room terminal 2 and in such a case the room terminal need simply to be placed close to the television receiver with which it is to be associated, the pickup coil 18 being located internal to the room terminal 2.

The second form caters for the situation in which the line synchronisation signals are of insufficient strength or localised furniture prevents the siting of the room terminal sufficiently close to the television receiver to enable detection by internally mounted pickup coils. In this case the pickup coil may be arranged on a flying lead external to the room terminal 2 and may be attached to the back of the television unit.

The microprocessor 29 in the room terminal 2 can be arranged to be capable of functioning with either form of pickup coil without being told specifically which form is being used.

If the pickup coil is arranged internally within a room terminal it is feasible that the pickup coil position may change if the room terminal in question is accidentally knocked or moved during normal room cleaning procedures. Such actions may cause the pickup coil to become located in a position unsuitable or undesirable for the best detection of the line synchronisation signals. For this reason two pickup coils 18 may be provided for each room terminal 2. The microprocessor in the room terminal can then be arranged to measure a characteristic of the waveform from one of the coils, such as the mark space ratio, and if it drops below a predetermined value, say 70% 30%, the pickup coil in question can be substituted by the other coil. This assists in selecting the best signal strength available.

As the room terminal and its pickup coils are either separate from or simply physically attached to an associated television receiver, the possibility of accidental or deliberate tampering also exists. This may be catered for by a combination of mechanical switches and/or software routines as described below.

The monitored television receiver is normally arranged to receive its electrical power via the room terminal where the current sensor 28 is used to establish if the television is switched on. If two pickup coils 18 are internal to the terminal 2, the microprocessor 29 measures a characteristic of the output waveform, such as the mark space ratio, from the coil currently being used to detect the line synchronisation signals. If the mark space ratio drops, say, below 70% 30% the coil in question is substituted for the other coil. If the waveform is still measured as being outside these values and the television current sensor 28 indicates that the television is ON, then the tamper alarm 17 is flagged.

If the coil is arranged external to the terminal 2, the above mark space ratio measurement is still carried out. However, in this mode of operation an additional tamper alarm switch may be provided. When this is activated a second type of alarm condition may be flagged, for example, a power relay 19 may disconnect power from the television receiver until a special command is received by the microprocessor 29 from the computer 6.

The power relay 19 may also provide a means to bar the viewing of certain channels upon request. The computer 6 can be programmed by a system controller upon request to restrict the access of certain pay channels to any television receiver in any room, for example adult movie restrictions requested by parents. As the computer 6 scans all room terminals of the system to check for any pay channels being viewed it will, when viewing of a pay channel is detected, check if that channel for that room has been barred. If it is, the power relay 19 is used as described previously to disconnect power from the television receiver. The television receiver can remain barred until the associated room terminal receives a special reset command from the computer 6. The issue of such commands can be activated by the system controller.

It will be appreciated from the above description that the present invention provides a system offering a relatively low cost and easy to implement way in which consumers viewing specific channels dedicated to transmit video signals can be billed and be informed they are being billed. No major modifications are required to the conventional video source or television receiver equipment and the computer 6 can be programmed to run the system without manual intervention, obviating the need for the system to be manned on a 24 hour basis.

Although the present invention has been described with respect to specific embodiments, it should be realised that modifications may be effected whilst remaining within the scope of the invention.

## Claims

1. A video network comprising a head end equipment at a first location for providing video signals on a plurality of channels; one or more terminals for location remote from the head end equipment, the or each terminal associated with a respective television receiver; control means associated with the head end equipment for providing control signals for controlling at least one terminal; respective further control means associated with the or each terminal for causing operation of the terminal and or the television receiver associated therewith in response to control signals received thereby, and respective detection means associated with the or each terminal for detecting whether the television receiver associated therewith is tuned to one of a specific selection of channels of the plurality of channels and for providing an indication to the head end equipment that the television receiver is tuned to one of the specific selection of channels.

2. A network according to claim 1, wherein the head end equipment includes means to provide video player source video signals and video signals from off air broadcasts.

3. A network according to claim 1 or claim 2, wherein at least one detection means is arranged to detect the instantaneous phase of the video signal to which the television receiver associated therewith is tuned and to compare the detected instantaneous phase with the instantaneous phase of each of the video signals provided by the head end equipment, thereby to determine whether the said television receiver is tuned to one of the specific selection of channels.

4. A network according to claim 3, wherein the detection means comprises a counter circuit arranged to receive from a terminal a first signal dependent upon the video signal to which the television receiver associated with the said terminal is tuned and in sequence a plurality of further signals, each dependent upon a respeotive one of the video signals provided by the head end equipment on the plurality of channels, the counter circuit being arranged to commence counting on receipt of a leading edge of a first signal and to terminate counting on receipt of a leading edge of a further signal, thereby to provide a count value indicative of the relative phase between the first and further signals.

5. A network according to claim 3 or claim 4 comprising storage means for storing a plurality of values of the detected instantaneous phase for enabling the detected instantaneous phase to be compared with the instantaneous phase of each of the video signals over a number of cycles of the video signals.

6. A network according to any one of claims 1 to 5 comprising a printer for providing recorded details of any television receiver detected as being tuned to one of the specific selection of channels.

7.  A network according to any one of the preceding claims wherein the control means is arranged, on detection of a television receiver tuned to one of the specific selection of channels, to provide control signals to the television receiver associated with said terminal for inhibiting the operation of the said television receiver.

8.  A network according to any one of the preceding claims wherein the control means is arranged to provide warning signals for providing an indication to a viewer of a television receiver detected as tuned to one of the specific channels that the television receiver is tuned to one of the specific channels.

9.  A network according to any one of the preceding claims wherein a terminal comprises a current sensor for sensing operation of a television receiver associated with the said terminal, the terminal being arranged to actuate a tamper alarm if a characteristic of the output signal from the detection means monitored by the further control means is detected as exceeding predetermined limits and the said television receiver has been sensed as being in operation.

10. A network according to any one of the preceding claims comprising a monitoring circuit for providing stimulus signals at a predetermined frequency, the control means being arranged to reset the system if a stimulus signal is detected as being absent for a time interval in excess of a predetermined time interval.

FIG.1

FIG.2

EP 0 430 711 A2

FIG.3

FIG. 4